# EUROPEAN PATENT SPECIFICATION

(11) **EP 3 034 669 B1**
(45) Date of publication and mention of the grant of the patent: **31.03.2021**
(21) Application number: 15187130.8
(22) Date of filing: 28.09.2015
(51) Int. Cl.: D06F 25/00, D06F 33/72, D06F 105/28, D06F 105/46, D06F 33/70, D06F 33/74, D06F 58/22, D06F 103/32, D06F 103/38, D06F 103/42, D06F 103/52, D06F 105/02

(54) **WASHING MACHINE HAVING DRYING FUNCTION AND METHOD FOR CONTROLLING THE SAME**
WASCHMASCHINE MIT TROCKNUNGSFUNKTION UND VERFAHREN ZU DEREN STEUERUNG
MACHINE À LAVER POSSÉDANT UNE FONCTION DE SÉCHAGE ET SON PROCÉDÉ DE COMMANDE

(30) Priority: 15.12.2014 KR 20140180472
(43) Date of publication of application: 22.06.2016
(73) Proprietor: Samsung Electronics Co., Ltd., Suwon-si, Gyeonggi-do (KR)
(72) Inventor: Kim, Zoo Hyeong, Suwon-si, Gyeonggi-do (KR); Lee, Jae-Poong, Suwon-si, Gyeonggi-do (KR); Lee, Chang Hoon, Suwon-si, Gyeonggi-do (KR); Lim, Hyung-Sub, Suwon-si, Gyeonggi-do (KR); Jung, Woo Sup, Suwon-si, Gyeonggi-do (KR)
(74) Representative: Gulde & Partner

(56) References cited:
- WO-A2-2010/137910
- JP-A- H11 114 286
- US-A1- 2008 282 568
- US-A1- 2013 205 840
- US-A1- 2013 276 327
- US-A1- 2013 318 813

## Description

### 1. Field

Embodiments of the present invention relate to a washing machine having a drying function (hereinafter referred to as a washing and drying machine) and a method for controlling the same, and more particularly to a washing and drying machine for preventing water from entering a drum during a drying process, and a method for controlling the same.

### 2. Description of the Related Art

A drying device supplies hot air heated by a drying heater to a drum containing clothes (hereinafter referred to as laundry) while rotating the drum, such that the laundry can be dried. Recently, a washing machine having a drying function (hereinafter referred to as a washing and drying machine) performs a drying process alone or performs a drying function in tandem with a washing process after completion of dehydration, using the drying device.

The washing and drying machine prevents steam caused by a drying process from leaking outside, and supplies water into a tub so as to remove lint collected in an inlet of a drying duct. In this case, since the drum rotates at a rotation speed of 40 revolutions per minute (RPM) for the drying process or stops operation, water supplied into the tub is applied to the drum. If water is supplied into the drum, laundry stored in the drum becomes wet, resulting in reduction of drying efficiency. In addition, due to the increased duration of the drying process, unnecessary energy consumption unavoidably increases.

Washing machines are disclosed e.g. in US 2013/318813A1, US 2013 205840 A1 and US 2013/276327 A1

### SUMMARY

Therefore, the current invention proposes in one aspect a washing and drying machine according to claim 1 and a method according to claim 6 for controlling a washing and drying machine. Embodiments this aspect comprise features as specified in the dependent claims.

it is a further aspect of the present invention to provide a washing and drying machine which first increases a rotation speed of a drum when a water supply condition in which water must be supplied into a tub occurs during execution of a drying process, and then supplies water into the tub, so as to prevent water from leaking into the drum, and a method for controlling the washing and drying machine.

Additional aspects of the invention will be set forth in part in the description which follows and, in part, will be obvious from the description, or may be learned by practice of the invention.

In accordance with an aspect of the present invention, a washing and drying machine includes: a tub; a water supply unit configured to supply water into the tub; a drum rotatably installed in the tub to accommodate laundry; a motor configured to rotate the drum; a drying unit disposed over the tub, configured to heat air discharged from the tub and circulate the heated air in such a manner that the laundry is dried; and a controller configured to control the water supply unit and the motor in a manner that water supply is performed after a rotation speed of the drum reaches a predetermined speed, when a water supply condition occurs during execution of a drying process based on the drying unit. The drying unit further includes: a heater and blowing fan configured to generate hot air for drying the laundry; a drying duct configured to direct the hot air into the drum; a circulation passage configured to allow air discharged from the tub to circulate in the drying duct; a filter installed at a suction inlet of the drying duct, configured to remove lint generated in the drying process; and a temperature sensor installed in the drying duct (40), configured to detect a temperature of the drying unit. The controller is configured to control on/off operations of the heater according to the temperature of the drying unit during execution of the drying process.

The controller is further configured to determine the presence or absence of filter clogging using the number (N) of heater-off occurrence in which the heater-off time is equal to or longer than a predetermined time, and to detect occurrence of a water supply condition in response to determining the presence of filter clogging, to control the motor such that the drum rotates at the predetermined speed, and to control the water supply unit such that water is supplied to the filter (60) in a manner that lint collected in the filter is removed.

The controller may drive the motor before execution of the water supply so that the rotation speed of the drum increases to the predetermined speed.

The controller may count a time in which the rotation speed of the drum increases, and control the water supply unit when the counted time reaches a predetermined time or higher such that water is supplied into the tub.

The controller may drive the motor after completion of the water supply so that the rotation speed of the drum returns to a speed for the drying process.

The controller may count a time consumed after completion of the water supply, and control the motor when the counted time reaches a predetermined time so that the rotation speed of the drum returns to the speed for the drying process.

The water supply condition may include: a first water supply condition in which water is supplied into the tub during start of the drying process; and a second water supply condition in which water is supplied into the tub during execution of the drying process. The first water supply condition may include: supplying water to a water supply pipe connected to the tub so as to prevent wet stream generated during execution of the drying process from leaking outside.

The second water supply condition may include: supplying water to the filter in a manner that lint collected in the filter is removed during execution of the drying process.

In accordance with another example which is not part of the present invention, a washing and drying machine which includes a tub, a water supply unit to supply water into the tub, a drum rotatably installed in the tub to accommodate laundry, a motor to rotate the drum, and a drying unit to heat air discharged from the tub and circulate the heated air, the washing and drying machine includes: an input unit configured to select a drying course of the washing and drying machine; and a controller configured to control the water supply unit and the motor in a manner that a rotation speed of the drum increases before water is supplied into the tub, when a water supply condition occurs in the drying process executed according to the selected drying course.

The controller may include: a first water supply control process in which water supply is performed during start of the drying process; and a second water supply control process in which water supply is performed during execution of the drying process.

The first and second water supply control processes may include: driving the motor before execution of the water supply so that the rotation speed of the drum increases to a predetermined speed.

The first and second water supply control processes may include: driving the motor after completion of the water supply so that the rotation speed of the drum returns to a speed for the drying process.

In accordance with another aspect of the present invention, a method for controlling a washing and drying machine which includes a tub, a water supply unit to supply water into the tub, a drum rotatably installed in the tub to accommodate laundry, a motor to rotate the drum, a heater to heat air discharged from the tub, a blowing fan to supply heated air into the tub, a drying duct to circulate the heated air, a filter disposed in the drying duct, and a temperature sensor to detect a temperature of the heated air in the drying duct, the method includes: determining whether a current process is a drying process; determining whether a water supply condition occurs during execution of the drying process; if the water supply condition occurs, increasing a rotation speed of the drum by controlling the motor until the rotation speed of the drum reaches a predetermined speed, and supplying water into the tub by controlling the water supply unit thereafter.

The method further comprises measuring a heater-off time; determining whether the filter is clogged using the number (N) of heater-off occurrence in which the heater-off time is equal to or longer than a predetermined time; operating the motor such that the rotation speed of the drum reaches at the predetermined speed when it is determined that the filter is clogged, and operating the water supply unit to supply water into the tub such that water is supplied to the filter in a manner that lint collected in the filter (60) is removed.

The method may further include: controlling the motor after completion of the water supply so that the rotation speed of the drum returns to a speed for the drying process.

The determining whether the water supply condition occurs may include: determining whether the drying process starts; and determining the presence or absence of filter clogging during execution of the drying process.

### BRIEF DESCRIPTION OF THE DRAWINGS

These and/or other aspects of the invention will become apparent and more readily appreciated from the following description of the embodiments, taken in conjunction with the accompanying drawings of which:
FIG. 1 is a cross-sectional view illustrating a washing and drying machine according to an exemplary embodiment of the present invention.
FIG. 2 is a schematic diagram illustrating a washing and drying machine according to an exemplary embodiment of the present invention.
FIG. 3 is an exploded perspective view illustrating a washing and drying machine according to an exemplary embodiment of the present invention.
FIG. 4 is a schematic diagram illustrating a suction member according to an exemplary embodiment of the present invention.
FIG. 5 is an exploded perspective view illustrating a suction member according to an exemplary embodiment of the present invention.
FIG. 6 is a perspective view illustrating a suction member when viewed from another angle according to an exemplary embodiment of the present invention.
FIG. 7 is a cross-sectional view illustrating a suction member according to an exemplary embodiment of the present invention.
FIG. 8 is a block diagram illustrating a washing and drying machine according to an exemplary embodiment of the present invention.
FIGS. 9A and 9B are flowcharts illustrating an overall control algorithm of a drying process of a washing and drying machine according to an exemplary embodiment of the present invention.
FIG. 10 is a conceptual diagram illustrating the flow of air needed for a drying function of a washing and drying machine according to an exemplary embodiment of the present invention.
FIG. 11 is a flowchart illustrating a first water supply control algorithm for a drying process of a washing and drying machine according to an exemplary embodiment of the present invention.
FIG. 12 is a flowchart illustrating a second water supply control algorithm for a drying process of a washing and drying machine according to an exemplary embodiment of the present invention.
FIG. 13 is a conceptual diagram illustrating the flow of water needed for cleaning a filter of a washing and drying machine according to an exemplary embodiment of the present invention.

### DETAILED DESCRIPTION

Reference will now be made in detail to the embodiments of the present invention, examples of which are illustrated in the accompanying drawings, wherein like reference numerals refer to like elements throughout.

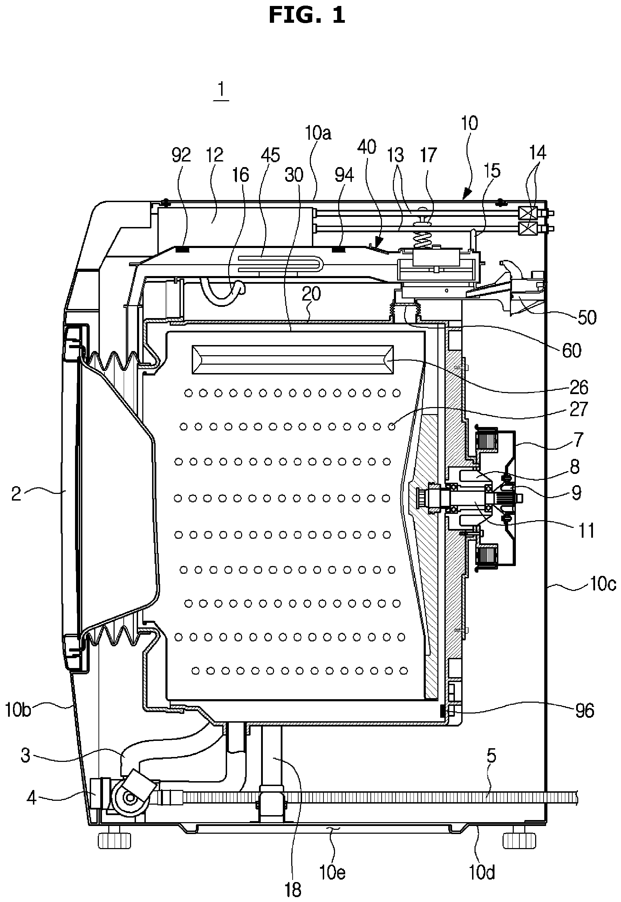

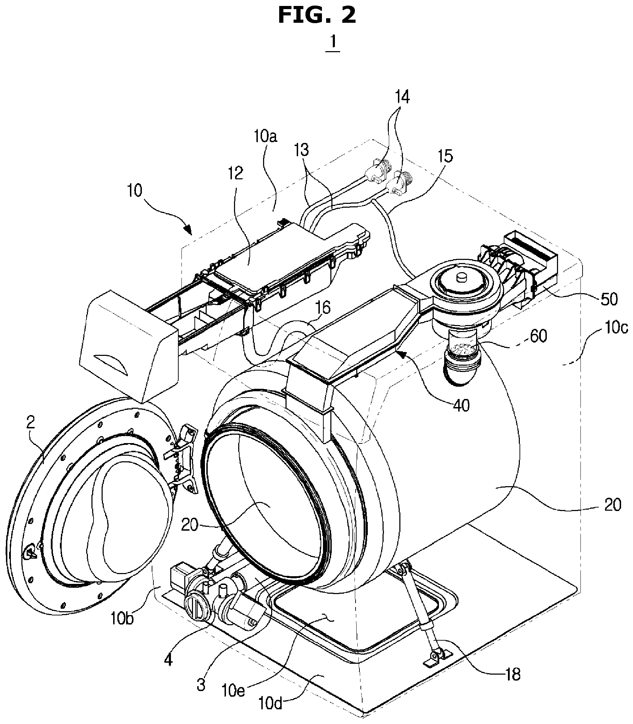

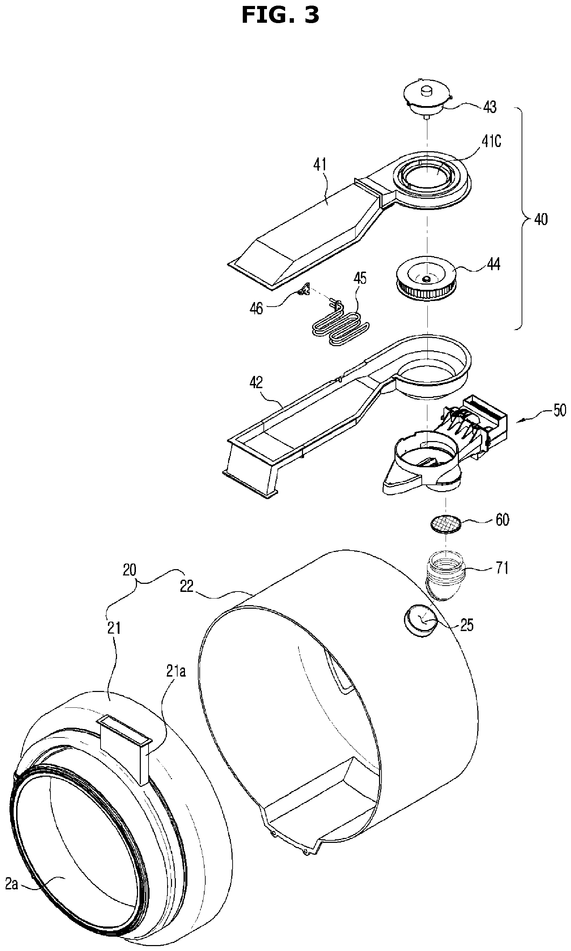

FIG. 1 is a cross-sectional view illustrating a washing and drying machine according to an exemplary embodiment of the present invention. FIG. 2 is a schematic diagram illustrating the washing and drying machine according to an exemplary embodiment of the present invention. FIG. 3 is an exploded perspective view illustrating the washing and drying machine according to an exemplary embodiment of the present invention.

Referring to FIGS. 1 to 3, the washing and drying machine 1 includes: a cabinet 10 formed approximately in a box shape to form the external appearance thereof; a tub 20 disposed in the cabinet 10; a drum 30 rotatably mounted in the tub 20; and a motor 7 to drive the drum 30.

In general, the motor 7 may be implemented as a universal motor composed of a field coil and an armature or a brushless direct current motor (BLDC) motor composed of a permanent magnet and an electromagnet, and any motor applicable to a small-to-medium size drum 20 may serve as the motor 7. In addition, the motor 7 may also be configured as a belt-drive motor.

The tub 20 may include a first tub 21 located at the front of the inner space of the cabinet 10, and a second tub 22 coupled to the rear surface of the first tub 21. The first tub 21 may include a cylindrical unit disposed in a circumferential direction and a front plate disposed at the front surface of the cylindrical unit. The second tub 22 may include a cylindrical unit arranged in the circumferential direction and a rear plate located at the rear surface of the cylindrical unit. The cylindrical unit of the first tub 21 is coupled to the cylindrical unit of the second tub 22, resulting in formation of the tub 20.

The cabinet 10 may include frames 10a, 10b, 10c, 10d. The frames 10a, 10b, 10c, 10d may include a top frame 10a forming a top surface of the cabinet 10, a front frame 10b forming a front surface of the cabinet 10, a rear frame 10c forming a rear surface of the cabinet 10, and a bottom frame 10d forming a bottom surface of the cabinet 10 to interconnect the front frame 10b and the rear frame 10c. A bottom hole 10e for suctioning low-temperature air from the outside of the washing and drying machine 1 may be formed at the bottom frame 10d.

An inlet 2a may be formed at the front frame 10b of the cabinet 10 such that a user can put or withdraw laundry in or from the drum 30 through the inlet 2a. The inlet 2a may be opened or closed by a door 2 installed at the front frame 10b of the cabinet 10.

A spring 17 for vertically supporting the tub 20 may be provided between the tub 20 and the cabinet 10. The spring 17 may reduce vibration and noise generated by movement of the tub 20 due to elastic damping action.

The water supply pipe 13 for supplying water (washing water or rinsing water) to the tub 20 may be installed at the top part of the tub 20. One side of the water supply pipe 13 may be coupled to an external water-supply source (not shown), and the other side thereof may be coupled to a detergent supply device 12.

A sub water supply pipe 15 connected to the suction member 50 to be described later may be coupled to one side of the water supply pipe 13.

In accordance with the embodiment, the detergent supply device 12 may be coupled to the tub 20 through a connection water supply pipe 16, because the detergent supply device 12 is located at the front of the inner space of the cabinet 10. In the meantime, the connection water supply pipe 16 may be formed in a U-trap shape such that it can prevent steam generated by execution of the drying process from leaking outside.

Therefore, water received through the water supply pipe 13 may be mixed with detergent through the detergent supply device 12, and then supplied into the tub 20 through the connection water supply pipe 16. A water supply valve 14 is installed at the water supply pipe 13 such that it can control the supply of water.

The tub 20 may be supported by a damper 18. The damper 18 may connect the outer surface of the tub 20 to the inner bottom surface of the cabinet 10. In addition, the damper 18 may also be located at the upper side and the left and right sides of the cabinet 10 in addition to the inside bottom surface of the cabinet 10 so as to support the tub 20. The damper 18 or the spring 17 may attenuate vibration and impact caused by vertical motion of the tub 20 above and below the tub 20.

The rear surface of the drum 30 may be connected to a drive shaft 11 to which the motor 7 transmits power. A plurality of through-holes 27 through which wash water passes may be formed around the drum 30. A plurality of lifters 26 may be installed on an inner circumferential surface of the drum 30 so that laundry is tumbled during rotation of the drum 30.

The drive shaft 11 may be disposed between the drum 30 and the motor 7. One end of the drive shaft 11 may be connected to the rear plate of the drum 30, and the other end of the drive shaft 11 may extend outside a rear wall of the tub 20. When the motor 7 drives the drive shaft 11, the drum 30 connected to the drive shaft 11 may rotate about the drive shaft 11.

The rear plate of the second tub 22 is provided with a bearing housing 8 so as to rotatably support the drive shaft 11. The bearing housing 8 may be made of an aluminum alloy, and be inserted into the rear wall of the second tub 22 during injection molding of the second tub 22. Bearings 9 may be installed between the bearing housing 8 and the drive shaft 11 so that the drive shaft 11 may be smoothly rotated.

The tub 20 is provided, at a lower portion thereof, with a drain pump 4 to discharge water within the tub 20 to the outside of the cabinet 10, a connection hose 3 connecting the tub 20 to the drain pump 4 such that water within the tub 20 may be introduced into the drainage pump 4, and a drain hose 5 configured to guide water pumped by the drain pump 4 to the outside of the cabinet 10.

In addition, a second temperature sensor 96 configured to detect an air temperature of an inner space of the drum 30 configured to dry and discharge laundry may be installed at the bottom of the rear surface of the tub 20. The second temperature sensor 96 may be formed of a thermistor, a resistance of which is changed according to a temperature variation, and one or more thermistors may be installed into the tub 20.

The tub 20 is provided with a drying unit which dries hot and humid air within the tub 20 and then supplies the dried air into the tub 20 again. The drying unit may remove moisture of the condensed air contained in the tub 20.

In accordance with the embodiment of the present invention, the drying unit is constituted of the tub 20 in which moisture in air is condensed and a drying duct 40 in which the condensed air is heated and supplied into the drum 30. The drying unit may heat and circulate air within the tub 20 so as to dry laundry within the drum 30. Thus, air may circulate between the tub 20 and the inside of the drying duct 40.

The drying duct 40 may be coupled to the second tub 22. A connection member 71 via which one end of the drying duct 40 is coupled to one end of the second tub 22 may be provided between the second tub 22 and the drying duct 40. That is, the connection member 71 connected to a hole 25 of the second tub 22 may be located between the tub 20 and one end of the drying duct 40 through which air is introduced from the tub 20 into the drying duct 40.

A blowing fan 44 may be located between the drying duct 40 and the tub 20. The blowing fan 44 may form the circulation flow of air such that air in the tub 20 may be introduced into the drying duct 40 and then be introduced into the tub 20 again. The drying duct 40 may be equipped with a heater 45 to heat air therein. A bracket 46 may be provided by which the heater 45 is coupled to the drying duct 40.

The heater 45 may be formed to have a predetermined diameter and length. The heater 45 may be formed in a zigzag pattern. The heater 45 may include a terminal unit connected to an electric wire through which a current flows; a sealing member spaced apart from the terminal unit by a predetermined distance so as to prevent leakage of air; and a heating unit extending from the terminal unit. The heating unit may be formed to have a predetermined diameter and length, and be curved several times.

The bracket 46 may be coupled to the outer sides of an upper plate and a lower plate 42 so as to fix the heater 45 in the drying duct 40. Some parts of the terminal unit may be disposed at the outer sides of the upper plate 41 and the lower plate 42, and the sealing member may be located at the rear of the upper plate 41 and the lower plate 42. The bracket 46 may be inserted into the terminal unit at the outside of the drying duct 40.

The bracket 46 may be formed of an insulation material. That is, to prevent heat of the heater 45 from being applied to the bracket 46, a conductor cannot be used in the bracket 46 such that overheating of the bracket 46 can be prevented. In order to withstand heat generated from the heater 45, the bracket 46 may be formed of a material having high heat resistance. In accordance with one embodiment of the present invention, the bracket 46 may be formed of a material satisfying the above requirement, such as polyphenylene sulfide (PPS) or polyethylene terephthalate (PET).

A first temperature sensor 92 and the thermostat 94 may be disposed in the drying duct 40. The first temperature sensor 92 may be configured to detect a temperature of air generated from the heater 45. The thermostat 94 may operate according to temperature of the heater 45.

The first temperature sensor 92 may be formed of a thermistor, resistance of which is changed according to a temperature variation, and may be disposed at one side of the drying duct 40.

The thermostat 94 may be disposed at the other side of the drying duct 40, and one or more thermostats 94 may be disposed at the other side of the drying duct 40.

The drying duct 40 may include an upper plate 41 and a lower plate 42. In addition, a head 43 may be disposed over the blowing fan 44.

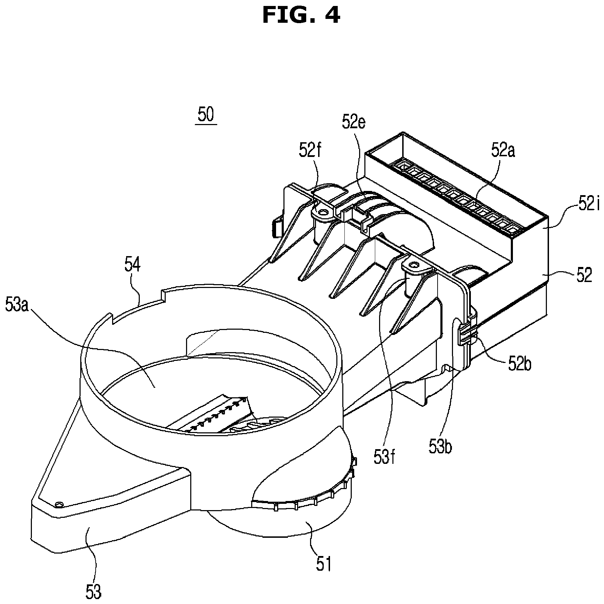

A suction member 50 in which the blowing fan 44 is seated may be disposed below the drying duct 40. The suction member 50 will hereinafter be described with reference to FIGS. 4 to 7.

One side of the drying duct 40 may be coupled to the front panel 21a extending from one side of the first tub 21. Therefore, air may circulate between the tub 20 and the drying duct 40.

If the drum 30 rotates and the blowing fan 44 is driven during the drying process, air within the tub 40 may be introduced into the drying duct 40. Air heated by the drying duct 40 is repeatedly introduced into the tub 20, such that the air may circulate between the drying duct 40 and the tub 20.

In addition, a filter 60 to filter out impurities (such as dust or lint) generated by dried laundry during execution of the drying process may be installed at the connection member 71 located at a suction inlet of the drying duct 40.

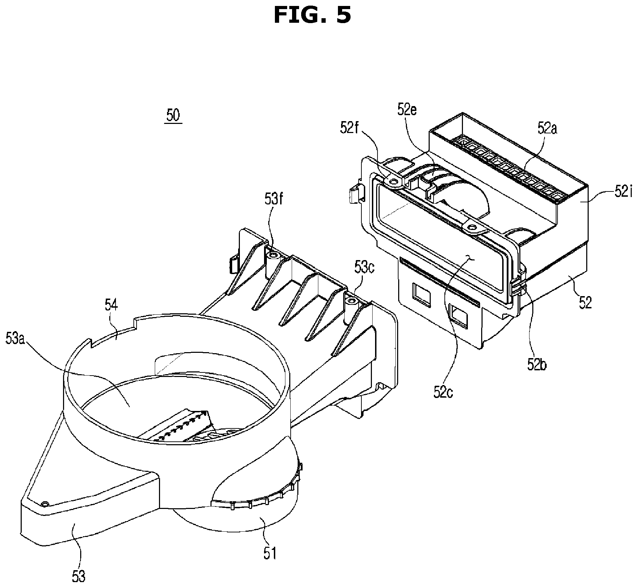

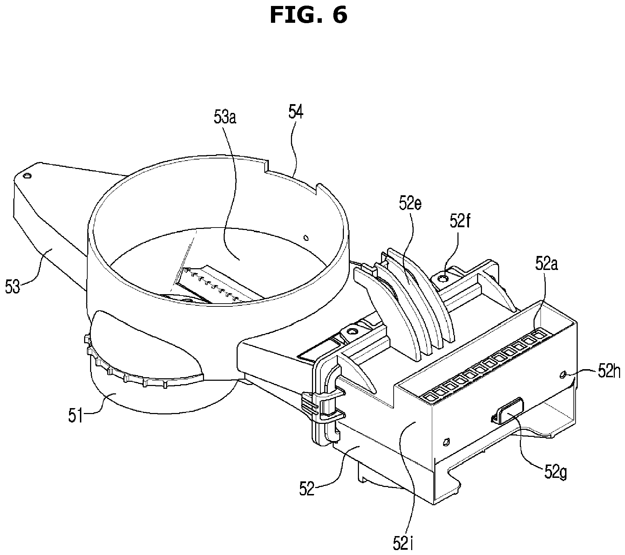

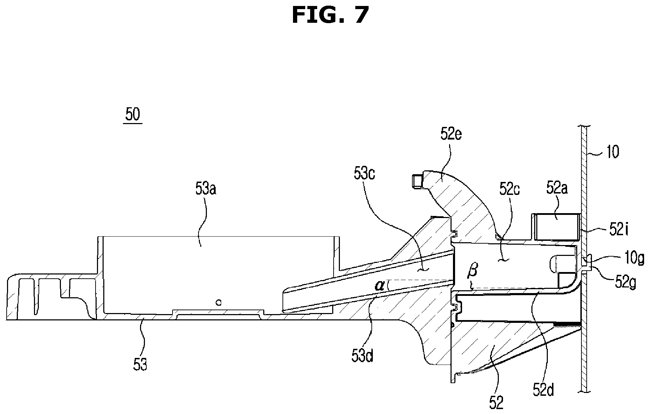

FIG. 4 is a schematic diagram illustrating a suction member according to an exemplary embodiment of the present invention. FIG. 5 is an exploded perspective view illustrating the suction member according to an exemplary embodiment of the present invention. FIG. 6 is a perspective view illustrating the suction member when viewed from another angle according to an exemplary embodiment of the present invention. FIG. 7 is a cross-sectional view illustrating the suction member according to an exemplary embodiment of the present invention.

Referring to FIGS. 4 to 7, a flow passage for suctioning the air between the tub 20 and the cabinet 10 may be provided in the suction member 50. The suction member 50 may include a front member 53 located at a front surface and a rear member 52 located at a rear surface.

A seating unit 53a in which the blowing fan 44 is seated may be provided to the front member 53. The seating unit 53a may communicate with the tub 20, and the air condensed in the tub 20 may be shifted to the seating unit 53a due to the operation of the blowing fan 44. A slit 54 serving as a flow passage to suction the external air of the tub 20 may be provided to some parts of the front member 53. A front-member communication hole 51 to communicate with the tub 20 may be disposed below the front member 53.

A suction inlet 52a for suctioning the air between the tub 20 and the cabinet 10 may be provided to the rear member 52. As shown in the drawings, the suction inlet 52a may be provided to the top surface of the rear member 52, such that the air can be efficiently suctioned in the direction of the blowing fan 44. In addition, the suction inlet 52a is disposed over the rear member 52, such that only the air excluding bubbles may be suctioned. The suction inlet 52a may be provided to a protrusion unit 52i formed to protrude upward from the rear member 52, such that bubbles or water can be prevented from leaking outside through the suction inlet 52a. A support unit 52e configured to support the drying duct 40 with respect to the suction member 50 may be disposed over the rear member 52. The support unit 52e may be formed to protrude upward so as to support the top surface of the drying duct 40.

The front member 53 may be coupled to the rear member 52 through one or more one coupling units. The coupling unit may include first coupling units 52b, 53b configured to interconnect the front member 53 and the rear member 52 through a hook 52b. As shown in the drawings, the hook 52b mounted to the rear member 52 is coupled to a hook groove 53b of the front member 53 such that the front member 53 can be coupled to the rear member 52.

In addition, second coupling units 52f, 53f configured to couple the front member 53 to the rear member 52 through a separate coupling member (not shown) may be used. The second coupling units 52f, 53f may include a front-member coupling hole 53f located at the front member 53 and a rear-member coupling hole 52f located at the rear member 52. The rear-member coupling hole 52f may have a shape corresponding to the shape of the front-member coupling hole 53f. That is, a coupling member (not shown) may be inserted into the front-member coupling hole 53f through the rear-member coupling hole 53f, such that the front member 53 can be coupled to the rear member 52. In this case, the first coupling units 52b, 53b may be used to fix the front member 53 and the rear member 52, and the front member 53 may be coupled to the rear member 52 by the second coupling units 52f, 53f.

A flow passage through which the air suctioned through the suction inlet 52a moves may be provided at the inner sides of the front member 52 and the rear member 52. A flow passage provided to the rear member 52 may be defined as a first flow passage. A flow passage provided to the front member 53 may be defined as a second flow passage. The first flow passage may be defined by a rear-member communication hole 52c provided to the inside of the rear member 52. The second flow passage may be defined by a front-member communication hole 53c provided to the inside of the front member 53.

At least one of the front member 53 and the rear member 52 may include a tilted unit 52d or 53d, a bottom of which is tilted. The tilted unit 52d or 53d may be tilted in the direction of the blowing fan 44 to guide movement of air. The tilted unit 52d or 53d may be tilted by an angle of 1° to 20° with respect to the horizontal plane. As shown in the drawings, although the tilted unit 53d arranged at the front member 53 is tilted by an angle (α) of 15° with respect to the horizontal plane and the tilted unit 52d arranged at the rear member 52 is tilted by an angle (β) of 1° with respect to the horizontal plane, the present invention is not limited thereto. This enables wash water in the tub 20 to be prevented from overflowing from the tub by flowing backward.

As described above, the flow passages are arranged such that air may be sucked into the suction member 50 coupled to the lower side of the drying duct 40, so as to be capable of sucking air between the cabinet 10 and the tub 20. Since laundry can be dried using such air, a duration of the drying process can be reduced.

If the blowing fan 44 is driven during the drying process, high-temperature and high-humidity air contained in the tub 20 and low-temperature and low-humidity air are simultaneously suctioned through the suction inlet 52a of the suction member 50, air condensing (primary humidification) is achieved in the drying duct 40. Air condensed by the primary humidification removes moisture from laundry by passing through the heater 45 and the drum 30, air condensing (secondary humidification) is achieved by an inner surface of the tub 20, and the resultant air circulates again, such that laundry can be dried.

A fixing unit may be provided at some parts of the rear member 52 so as to fix the suction member 50 to the cabinet 10. The fixing unit may include first fixing units 52g, 10g configured to fix the suction member 50 to the cabinet 10 by coupling the hook 52g arranged at the rear surface of the rear member 52 to the hook groove 10g of the cabinet 10. In addition, the fixing unit may include a second fixing unit 52h configured to fix the cabinet 10 and the suction member 50 using a separate coupling member (not shown). The second fixing unit 52h may include fixing holes (not shown) arranged at the rear member 50 and the rear surface of the cabinet 10. The first fixing units 52g, 10g may be used for temporary fixing, and the coupling member (not shown) is coupled to the second fixing unit 52h such that the cabinet 10 is coupled to the suction member 50.

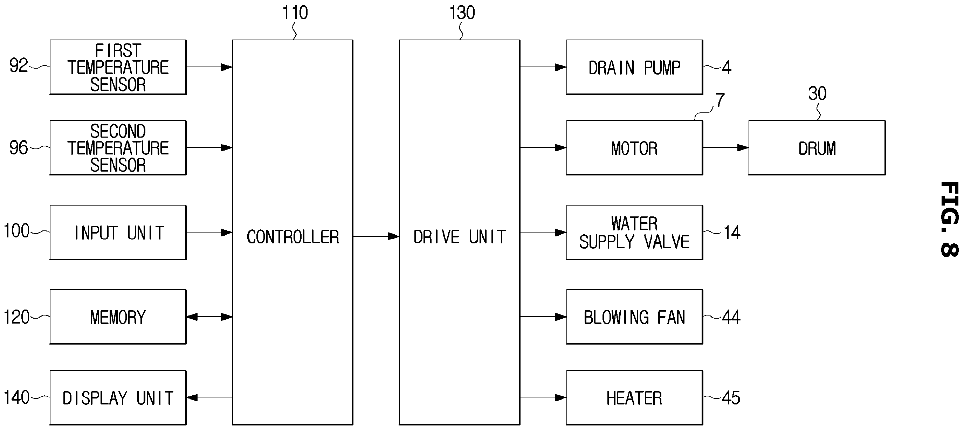

FIG. 8 is a block diagram illustrating the washing and drying machine according to an exemplary embodiment of the present invention.

Referring to FIG. 8, the washing and drying machine 1 according to an embodiment of the present invention may further include a first temperature sensor 92, a second temperature sensor 96, an input unit 100, a controller 110, a memory 120, a drive unit 130, and a display unit 140.

The first temperature sensor 92 may detect a temperature of air contained in the drying duct 40 mounted to the heater 45, i.e., a temperature of air introduced into the drum 30 after passing through the heater 45, and may transmit the detected air temperature to the controller 110.

The second temperature sensor 96 may detect a temperature of air contained in the drum 30 including laundry, i.e., air temperature at an outlet of the drum, and may transmit the detected temperature to the controller 110.

The input unit 100 may allow the user to input various commands for performing a washing process, a rinsing process, a dehydration process, a drying process, etc. of the washing and drying machine 1.

In addition, the input unit 100 may allow the user to input a user-selected drying course (e.g., normal, towel, perm, delicates, etc.) and other operation information such as a duration of the drying process and operation commands, etc. to the controller 110, and may include a variety of buttons mounted to the control panel.

In addition, the input unit 100 may include the above buttons, a jog dial, etc. such that it can select a drying state (e.g., a half-dried state, a fully-dried state, etc.). The input unit 100 may separately include a change button formed to adjust the operation factor and the duration of the drying process of the selected drying course.

Alternatively, the input unit 100 may be implemented as a key, a switch, a touchpad, or the like. The input unit 100 may include all devices that produce input data upon manipulation such as pushing, contact, pressing, and turning.

The controller 110 is a microprocessor that controls overall operations of the washing and drying machine 1 including washing, rinsing, dehydrating, and drying according to operation information input through the input unit 100.

While the drying process is performed according to a temperature detected by the first temperature sensor 92, the controller 110 may control the on/off operations of the heater 45.

In addition, the controller 110 may divide a drying section into a plurality of drying sections according to temperature detected by the second temperature sensor 96, and may control the drying process in different ways according to the plural drying sections.

In addition, the controller 110 may establish the amount of washing and rinsing water, the dehydration RPM and motor operation factor (motor on-off times), the washing and dehydration time, etc. according to a weight of laundry (load amount) during the selected washing course.

In accordance with one embodiment, if a water supply condition in which water must be supplied into the tub 20 occurs in the drying process, the controller 110 may control a rotation speed of the drum 30 such that the rotation speed of the drum 30 first increases and water is then supplied into the tub 20.

A detailed description of the above-mentioned operation will be given below.

Generally, two water supply conditions (1) and (2) in which water must be supplied into the tub 20 during execution of the drying process may be mainly used.

The water supply condition (1) is a first water supply condition in which water is supplied to a connection water supply pipe 16 for interconnecting the tub 20 and the detergent supply device 12 when the drying process starts
The first water supply condition (1) may allow the connection water supply pipe 16 to be filled with water, such that it can prevent high-temperature steam generated by the drying process from leaking outside through the connection water supply pipe 16. If high-temperature steam leaks outside during the drying process, the drying efficiency is deteriorated and duration of the drying process is increased. In order to fill the connection water supply pipe 16 with water before the drying process (or during start of the drying process), water may be supplied into the connection water supply pipe 16 during a fourth time (about 1 second or less).

The water supply condition (2) is a second water supply condition in which water supply is performed to remove lint collected in the filter 60 during execution of the drying process.

The second water supply condition is a lint-removing water supply condition in which water supply is performed to remove lint collected in the filter 60 when the condition that the filter 60 is clogged with the lint. If lint is collected in the filter 60 and the filter 60 becomes clogged with the lint during execution of the drying process, drying efficiency is decreased and the duration of the drying process is increased. Clogging of the filter 60 is detected during execution of the drying process such that water supply is performed during a sixth time (about 5 seconds or less).

The second water supply condition will hereinafter be described in detail.

If the drying process is performed, dust or lint generated during drying of laundry is mixed with air and then introduced into the suction inlet (i.e., the filter 60) of the drying duct 40, such that the dust or lint is accumulated in the filter 60.

If lint is accumulated in the filter 60, the filter 60 is gradually clogged with the lint, such that air resistance occurs in the air suctioned into the drying duct 40 and the amount of suctioned air is reduced. Therefore, the air passing through the heater 45 does not smoothly circulate, such that a heater-off time period (Toff) in which the heater 45 is overheated and turned off is unavoidably increased.

If the heater-off time period (Toff) is increased, the duration of the drying process is increased and drying efficiency is decreased.

Therefore, if the heater-off operation in which the heater-off time period (Toff) is increased by a first time period (about 70 seconds) or greater is repeated N times (e.g., about three times), this means that the filter 60 is clogged and the water supply operation for removing lint collected in the filter 60 is controlled.

As described above, if the water supply condition occurs before or during execution of the drying process, the controller 110 may control a first water supply control operation (i.e., water-supplying for preventing leakage of steam) in which a rotation speed of the drum 30 increases to a predetermined speed (about 80 rpm) or higher before water supply and the water supply is then performed, and may control a second water supply control operation (i.e., water-supplying for lint elimination). Therefore, water supplied into the tub 20 is sprayed from the surface of the drum 30 due to high-speed rotation of the drum 30, and flows in a space between the tub 20 and the drum 30, such that the washing and drying machine can minimize the amount of water supplied into the drum 30.

In addition, after completion of the second water supply control (water supply for lint removal), the controller 110 may repeatedly control the second water supply control operation in which water is supplied into the tub 20 so as to remove lint collected in the filter 60 at intervals of a predetermined time (about 30 minutes). The second water supply control operation repeated at intervals of the predetermined time (about 30 minutes) after initial completion of the second water supply control may further be performed, generally, one more time, during the duration of the entire drying process.

The memory 120 may store a variety of usage information of the washing and drying machine 1 and malfunction information of the washing and drying machine 1. In more detail, the usage information may include control data for controlling the operation of the washing and drying machine 1, reference data used in operation control of the washing and drying machine 1, operation data generated when the washing and drying machine 1 performs a predetermined operation, setting information such as setting data entered via the input unit 100 in a manner that the washing and drying machine 1 performs a necessary operation, the number of execution times of a specific operation performed by the washing and drying machine 1, and model information of the washing and drying machine 1. The malfunction information may include information regarding the malfunction reason and information regarding the malfunction position.

The drive unit 130 may drive the drain pump 4, the motor 7, the water supply valve 14, the blowing fan 44, the heater 45, etc. associated with the operations of the washing and drying machine 1 upon receiving a drive control signal from the controller 120.

The display unit 140 may display the operation state of the washing and drying machine 1 according to a display control signal of the controller 110, may recognize user-touch information received through the user interface, and may display a user manipulation state.

In addition, if the display unit 140 is implemented as an LCD UI capable of displaying text, the operation state of the washing and drying machine 1 is displayed using the text, such that the user can perform appropriate handling.

If the display unit 140 is implemented as an LED Ul, the display unit 140 indicating the LED UI can allow the user to recognize an abnormal or faulty state of the washing and drying machine 1 using light blinking or a persistent time difference.

The washing and drying machine having a drying device and the method for controlling the same according to the embodiment of the present invention will hereinafter be described in detail.

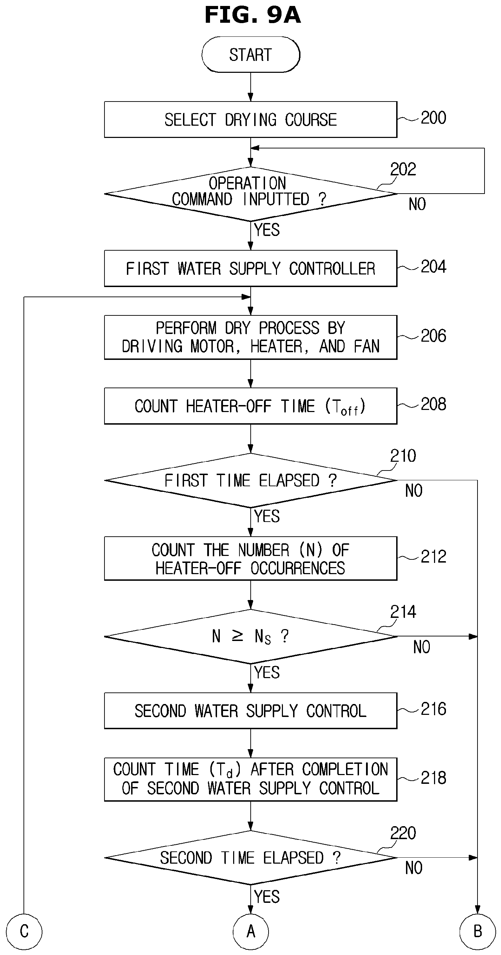

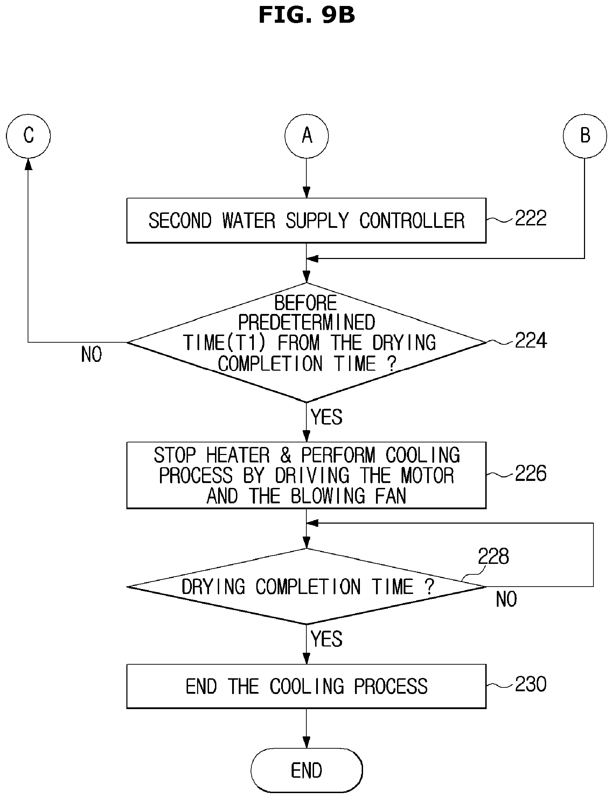

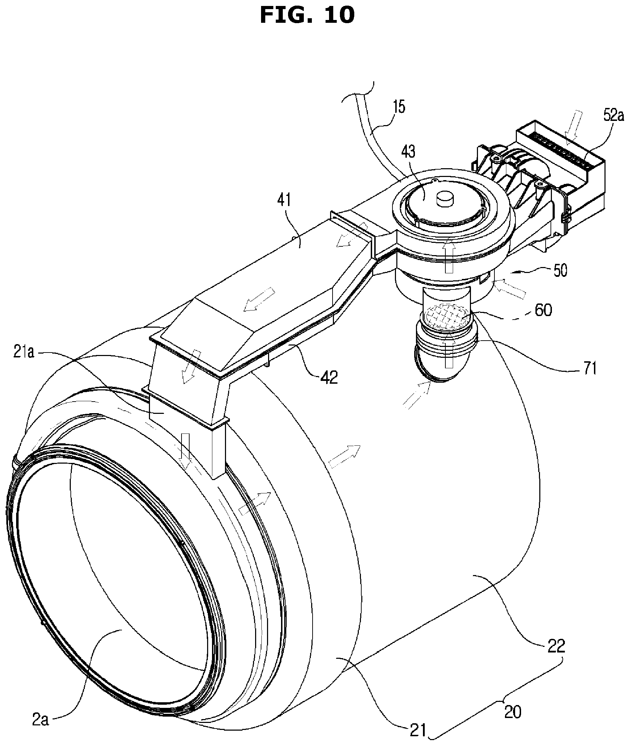

FIGS. 9A and 9B are flowcharts illustrating an overall control algorithm of the drying process of the washing and drying machine according to an exemplary embodiment of the present invention. FIG. 10 is a conceptual diagram illustrating the flow of air needed for the drying function of the washing and drying machine according to an exemplary embodiment of the present invention.

Referring to FIGS. 9A and 9B, if the user puts laundry to be dried into the drum 30 and selects a drying course (e.g., Normal, Towel, Perm, Delicates, etc.) according to laundry types in step 200, user-selected course information is input to the controller 110 through the input unit 100.

Alternatively, the user may manipulate the input unit 100, and thus select the washing course including the drying process according to laundry type. In this case, after the dehydration process is completed in association with the washing process, the drying process is then performed.

Therefore, the controller 110 may start to operate the drying process according to the course information received from the input unit 100. For this purpose, the controller 110 may determine whether an operation command has been entered in step 202.

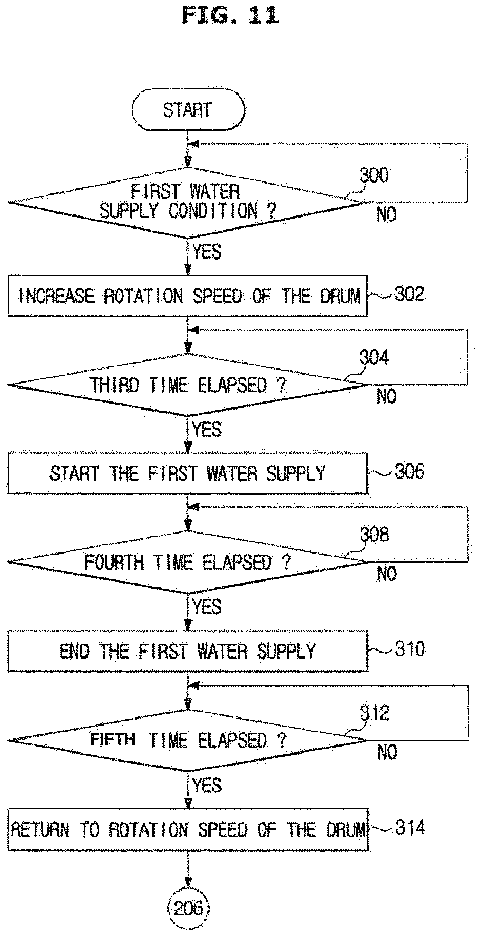

If the operation command is entered in step 202, the controller 110 may perform the first water supply control for filling the connection water supply pipe 16 with water before execution of the drying process (i.e., during start of the drying process) in step 204. As a result, high-temperature steam generated during the drying process is prevented from leaking outside through the connection water supply pipe 16. The first water supply control will hereinafter be described with reference to FIG. 11.

If the first water supply control is completed, the controller 110 may perform the drying process by driving the motor 7, the blowing fan 44, and the heater 45 through the drive unit 130 in step 206.

If the drying process starts operation, the drum 30 rotates according to driving of the motor 7, so that laundry contained in the drum 30 rotates and the air contained in the drum 30 starts to move in response to rotation of the blowing fan 44.

In this case, the air movement in the drum 30 according to the driving of the heater 45 is heated to generate high-temperature air (hot air), and the generated hot air is introduced into the drum 30 through the drying duct 40. The hot air introduced into the drum 30 moves up and down in the drum 30, contacts laundry rotating in the drum 30, and evaporates moisture contained in the laundry, such that the laundry can be dried through the drying process.

The drying process executed by driving of the blowing fan 44 and the heater 45 will be described hereinafter in detail.

If the blowing fan 44 is driven during the drying process, high-temperature and high-humidity air contained in the tub 20 and low-temperature and low-humidity air contained in the washing and drying machine 1 are simultaneously suctioned through the suction inlet 52a of the suction member 50, and then introduced into the drying duct 40 (See FIG. 10). Therefore, high-temperature and high-humidity air and low-temperature and low-humidity air are mixed in the drying duct 40, such that air condensing (primary dehumidification) is achieved. The air condensed by primary dehumidification passes through the heater 45 and the drum 30, removes moisture from laundry, and is condensed in the tub 20, such that air condensing (secondary dehumidification) based on the tub surface is achieved. Thereafter, high-temperature and high-humidity air contained in the tub 20 is recirculated recirculation according to driving of the blowing fan 44, such that laundry can be dried.

As described above, if the drying process starts operation, laundry contained in the drum 30 starts to be dried. During execution of the drying process, temperature of air contained in the drying duct 40 mounted to the heater 45 (i.e., temperature of air introduced into the drum 30 after passing through the heater 45) is detected by the first temperature sensor 92, and the detected air temperature is supplied to the controller 110.

Therefore, the controller 110 may control the on or off operation of the heater 45 when the drying process is performed according to temperature detected by the first temperature sensor 92.

If the drying process is performed, dust or lint generated during the drying process of laundry is introduced into the suction inlet (i.e., the filter 60) of the drying duct 40, such that the dust or lint is collected or accumulated in the filter 60.

If lint is collected or accumulated in the filter 60, the filter 60 is gradually clogged with the lint, and air resistance occurs in the air suctioned into the drying duct 40, such that the amount of suction air is reduced. Therefore, the air passing through the heater 45 does not smoothly circulate, such that the heater-off time (Toff) in which the heater 45 is overheated and turned off is unavoidably increased.

Therefore, the controller 110 may determine duration of the heater-off time period (Toff) in step 208, and may determine whether a first time period (e.g. about 70 seconds in which the heater is overheated and turned off due to lint collected in the filter) has elapsed in step 210.

If the first time period has elapsed in step 210, the controller 110 may determine that lint has been collected in the filter 60, such that the controller 110 may count the number (N) of Toff occurrence times in which the heater-off time period (Toff) is equal to or longer than the first time period (e.g. about 70 seconds) in step 212.

Subsequently, the controller 110 may determine whether the number (N) of Toff occurrence times in which the heater-off time period (Toff) is equal to or longer than a predetermined number (Ns) of times (about three times in which the heater-off time period (Toff) is extended due to filter clogging) in step 214.

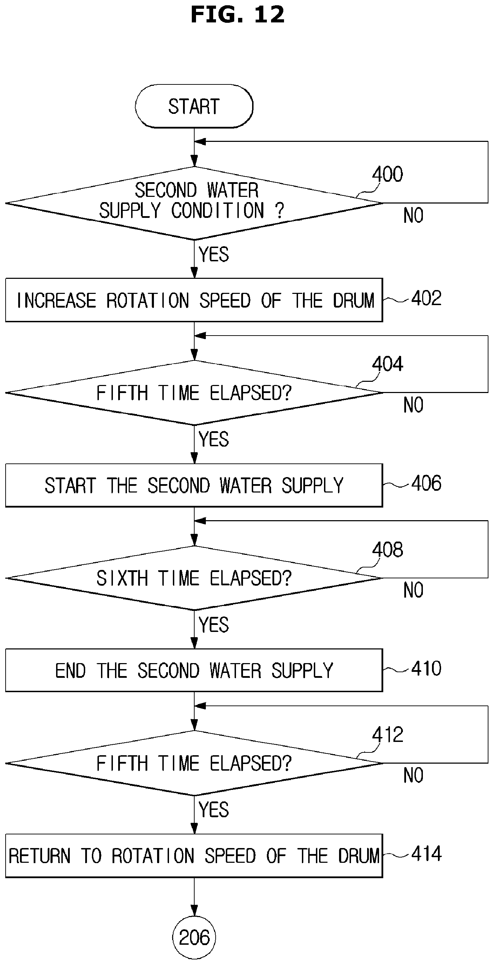

If the number (N) of Toff occurrence times is equal to or higher than the predetermined number (Ns) of times in step 214, the controller 110 may determine the occurrence of filter clogging during execution of the drying process, and may perform the second water supply control for removing lint from the filter 60 in step 216, such that the lint is prevented from being collected in and clogging the filter 60 during execution of the drying process. The second water supply control will hereinafter be described with reference to FIG. 12.

If the second water supply control is completed, the controller 110 may determine the drying time sub-period (Td) elapsed after completion of the second water supply control in step 218, and may determine whether a second time period has elapsed (e.g. about 30 minutes after the occurrence of initial filter clogging) in step 220.

If the second time period has elapsed in step 220, the controller 110 may repeatedly perform the second water supply control for removing lint collected in the filter 60 during execution of the drying process in step 222. If lint is collected in the filter 60 such that the filter 60 is clogged with the lint once, the controller 110 may determine that the large amount of link is generated from laundry, and may determine the second water supply control at intervals of a predetermined time (about 30 minutes) after initial completion of the second water supply control, so that lint collected in the filter 60 can be removed through the second water supply control.

If the second water supply control is completed, the controller 110 may count the drying time and may determine whether the counted drying time is located before a predetermined time (T1, e.g. about 5-10 minutes) from the drying completion time in step 224. In more detail, the controller 110 may stop the heater 45 from a predetermined time (T1, e.g. about 5-10 minutes) on the basis of the drying completion time, such that the air contained in the washing and drying machine 1 can be cooled.

If the heater 45 stops step before the predetermined time (T1) from the drying completion time in step 224, the controller 110 may feed back to step 206 and may thus perform a subsequent step.

In the meantime, if the heater 45 stops step before the predetermined time (T1) from the drying completion time in step 224, the controller 110 stops the heater 45 using the drive unit 130, and drives the motor 7 and the blowing fan 44 to perform the cooling process in step 226.

The cooling process may stop the heater 45, and may periodically turn the blowing fan 44 on or off. As a result, when the user opens the door 2 after completion of the drying process of the washing and drying machine 1, the user is prevented from being exposed to high-temperature air escaping from the drum. The cooling process may start when the remaining time (T1) to the completion time of the drying process is about 5∼10 minutes.

In addition, the blowing fan 44 may be turned off during 5 seconds or more, and then turned on, such that the completely turned-off time of the blowing fan 44 can be guaranteed. In accordance with the embodiment, when the cooling process is performed, the blowing fan 44 may be turned on for about 20 seconds and then turned off for about 10 seconds.

If the drying process is performed, air contained in the drum is at a high temperature, such that the surface temperature of the door 2 increases. If the surface temperature of the door 2 increases, the user may get burned. During execution of the drying process or after completion of the drying process, the surface temperature of the door must be prevented from excessively increasing. However, the surface temperature of the door 2 cannot be mandatorily reduced such that the user can be protected from being burned. In more detail, if temperature of the internal air of the drum 30 is decreased to reduce the surface temperature of the door 2, the user who takes laundry out of the drum 30 after completion of the drying process, may feel that the laundry is cold, such that the user may feel that the dryness of the laundry is low although the laundry is actually completely dry.

Therefore, since the cooling process for maintaining the surface temperature of the door 2 at an appropriate temperature is performed, the user is prevented from being injured or burned, and the temperature of dried laundry is prevented from decreasing, such that a laundry dryness level capable of satisfying the user can be provided.

Subsequently, the controller 110 may determine whether a current time is the drying completion time in step 228. If the drying completion time is provided, the motor 7 and the blowing fan 44 stop step, such that the cooling process is completed in step 230.

If the first time period does not elapse in step 210, the controller 110 proceeds to the step 224 such that it performs a subsequent step.

If, in step 214, the number (N) of Toff occurrences is determined to be equal to or higher than a predetermined number (Ns), the controller 110 proceeds to the step 224 such that it performs a subsequent step.

In addition, if the second time period does not elapse in step 220, the controller 110 proceeds to the step 224 such that it performs a subsequent step.

If the water supply condition in which the connection water supply pipe 16 is filled with water occurs during start of the drying process, the first water supply control step in which a rotation speed of the drum 30 is first increased and water supply is then achieved will hereinafter be described with reference to FIG. 11.

FIG. 11 is a flowchart illustrating a first water supply control algorithm for the drying process of the washing and drying machine according to an exemplary embodiment of the present invention.

Referring to FIG. 11, the controller 110 may determine whether the first water supply condition occurs during start of the drying process in step 300.

The first water supply condition is a water supply condition in which the connection water supply pipe 16 is filled with water such that high-temperature steam generated during execution of the drying process is prevented from leaking outside through the connection water supply pipe 16.

If the first water supply condition occurs in step 300, the controller 110 may drive the motor 7 using the drive unit 130 so that a rotation speed of the drum 30 is increased in step 302.

Since the drum is in a halt state when the drying process startsoperation, the controller 110 may count a predetermined number of time units in which the rotation speed of the drum 30 increases, and may thus determine whether the counted time is longer than a third time period (e.g. about 1 minute, needed to increase the rotation speed of the drum to, e.g., 80rpm) in step 304.

If the third time period has elapsed in step 304, the controller 110 may determine that the rotation speed of the drum 30 is equal to or higher than a predetermined speed (e.g. about 80 rpm), and may thus operate the water supply valve 14 using the drive unit 130 so as to fill the connection water supply pipe 16 with water.

If the water supply valve 14 operates, the water supply valve 14 is opened, such that the controller 110 starts the first water supply control in which water received through the external water supply pipe is supplied into the connection water supply pipe 16 after passing through the water supply pipe 13 and the detergent supply device 12 in step 306.

Meanwhile, the connection water supply pipe 16 is formed in a U-trap shape, such that the connection water supply pipe 16 is filled with the supplied water.

Subsequently, the controller 110 may count a further number of time units during the of the water supply valve 14, such that it may determine whether a fourth time period (e.g. about 1 second or less, needed to fill the connection water supply pipe with water) has elapsed in step 308 by comparing the counted further number with a predetermined threshold number.

If the fourth time period has elapsed in step 308, the controller 110 may determine that the connection water supply pipe 16 is filled with water, and may stop step of the water supply valve 14, such that it completes the first water supply control in step 310.

If the first water supply control is completed, the controller 110 may count yet further number of time units after completion of the first water supply control, and may determine whether the corresponding time period is longer than a fifth time period (e.g. about 1 minute, needed to maintain the rotation speed of the drum at, e.g., 80 rpm) in step 312.

If the fifth time period has elapsed in step 312, the controller 110 may determine that the rotation speed of the drum 30 is maintained at a predetermined speed (e.g. about 80rpm) or higher while water is supplied into the tub 20, may drive the motor 7 using the drive unit 130, and may allow the rotation speed of the drum 30 to return to a specific speed needed for the drying process in step 314.

Subsequently, after the controller 110 allows the drum 30 to return to the rotation speed for the drying process, the controller 110 may feed back to the step 206 and may then perform the drying process.

As described above, the first water supply condition in which the connection water supply pipe 16 is filled with water occurs when the drying process starts. In this case, the drum 30 is in a halt state prior to execution of the drying process. In this state, if water supply is achieved, there is a high probability that water supplied into the tub 20 is introduced into the drum 30, such that a large amount of water is introduced into the drum 30. If hundred grams of water are supplied into the tub 20 under the condition that the drum 30 is in the halt state, about fourty grams of water are introduced into the drum 30.

Therefore, the controller 110 increases the rotation speed of the drum 30 to about 30 rpm or more before water is supplied into the tub 20, so that the drum 30 can rotate at a high speed. Therefore, water supplied into the tub 20 is sprayed from the surface of the drum 30 due to high-speed rotation of the drum 30, and flows into a space between the tub 20 and the drum 30, such that the washing and drying machine 1 can minimize the amount of water supplied into the drum 30. When hundred grams of water are supplied into the tub 20 under the condition that the rotation speed of the drum 30 is equal to or higher than a predetermined speed (e.g. about 80 rpm), five grams of water are introduced into the drum 30.

In conclusion, if water is supplied into the tub 20 while rotating the drum 30 at a predetermined speed (e.g. about 80 rpm) or higher, the amount of water introduced into the drum 30 can be minimized, such that the drying efficiency can be increased and drying time can be reduced.

Meanwhile, although the embodiment has disclosed that a rotation-speed increasing time in which the rotation speed of the drum 30 increases prior to execution of the first water supply control is identical to a rotation-speed maintenance time in which the rotation speed of the drum 30 is maintained after completion of the first water supply control for convenience of description, it should be noted that the rotation-speed increasing time before execution of the first water supply control may be different from the rotation-speed maintenance time after completion of the first water supply control according to a structure or design of the washing and drying machine 1. Preferably, the rotation-speed increasing time of the drum 30 before control of the first water supply control may be longer than the rotation-speed maintenance time of the drum 30 after completion of the first water supply control.

After that, when the water supply condition in which water supply is achieved to remove lint collected in the filter 60 during execution of the drying process, the second water supply control operation in which the rotation speed of the drum 30 first increases and water supply is then performed is performed, and a detailed description of the second water supply control operation will hereinafter be described with reference to FIG. 12.

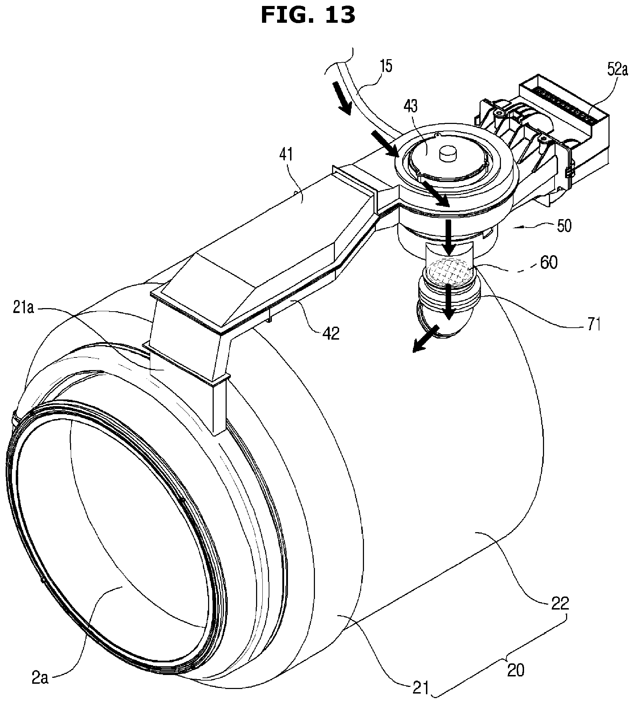

FIG. 12 is a flowchart illustrating a second water supply control algorithm for the drying process of the washing and drying machine according to an exemplary embodiment of the present invention. FIG. 13 is a conceptual diagram illustrating the flow of water needed for filter cleaning of the washing and drying machine according to an exemplary embodiment of the present invention.

Referring to FIG. 12, the controller 110 may determine whether the second water supply condition has occurred in the drying process in step 400.

The second water supply condition is a water supply condition in which water supply is performed to remove lint collected in the filter 60 when the lint is collected or accumulated in the filter 60 during execution of the drying process.

If a second water supply condition occurs in step 400, the controller 110 drives the motor 7 using the drive unit 130, such that the rotation speed of the drum 30 increases in step 402.

Since the drum 30 rotates at a speed of about 40rpm during execution of the drying process, the controller 110 may count the rotation-speed increasing time of the drum 30, and may determine whether a fifth time period (e.g. about 1 minute or less, needed to increase the rotation speed of the drum to, e.g., 80 rpm) has elapsed in step 404.

If the fifth time period has elapsed in step 404, the controller 110 may determine that the rotation speed of the drum 30 increases to a predetermined speed (e.g. about 80 rpm) or more, such that the controller 110 may operate the water supply valve 14 using the drive unit 130 so as to supply water into the tub 20.

If the water supply valve 14 operates, the second water supply control in which the water supply valve 14 is opened so that water received through the external water supply pipe is supplied into the tub 20 after passing through the water supply pipe 13 and the sub water supply pipe 15 starts operating in step 406.

Subsequently, the controller 110 may count the operation time period of the water supply valve 14, and may determine whether a seventh time period (e.g. about 5 seconds or less, needed to perform water supply so as to remove lint collected in the filter) has elapsed in step 408.

If the sixth time period has elapsed in step 408, the controller 110 may determine that the lint has been removed from the filter 60 (see FIG. 13), may stop operation of the water supply valve 14, and may thus complete the second water supply control in step 410.

If the second water supply control is completed, the controller 110 may count a number of time units after completion of the second water supply control, and may determine whether an fifth time period has elapsed (e.g. about 1 minute, needed to maintain the rotation speed of the drum at a speed of, e.g., 80 rpm) in step 412.

If the fifth time period has elapsed in step 412, the controller 110 may determine that the rotation speed of the drum 30 is maintained at a predetermined speed (e.g. about 80 rpm) or higher when water is supplied into the tub 20, may drive the motor 7 using the drive unit 130, and may allow the rotation speed of the drum 30 to return to a speed for the drying process in step 414.

Subsequently, the controller 110 may control the drum 30 to return to a rotation speed for the drying process, may feed back to the step 206, and may thus continuously perform the drying process.

As described above, the second water supply condition in which water supply is performed to remove lint collected in the filter 60 occurs in the drying process. In this case, the drum 30 rotates at a speed of about 40 rpm during execution of the drying process. In this state, if water supply is performed, a predetermined amount of water supplied into the tub 20 may be introduced into the drum 30. If hundred grams of water are supplied into the drum 30 under the condition that the drum 30 rotates at a speed of 40 rpm, about twenty grams of water may be introduced into the drum 30.

Therefore, the controller 110 may increase the rotation speed of the drum 30 to a rotation speed of about 80 rpm or higher before water is supplied into the tub 20, such that the drum 30 can rotate at a high speed. Water supplied into the tub 20 is sprayed from the surface of the drum 30 due to high-speed rotation of the drum 30, and flows into a space between the tub 20 and the drum 30, such that the washing and drying machine 1 can minimize the amount of water supplied into the drum 30. When hundred grams of water are supplied on the condition that the rotation speed of the drum 30 is equal to or higher than a predetermined speed (e.g. about 80 rpm), about five grams of water are introduced into the drum 30.

In conclusion, if water is supplied into the tub 20 on the condition that the drum 30 rotates at a predetermined speed (e.g. about 80 rpm) or higher, the amount of water introduced into the drum 30 can be minimized, such that drying efficiency can be increased and drying time can be reduced.

Meanwhile, although the embodiment has disclosed that a rotation-speed increasing time in which the rotation speed of the drum 30 increases prior to execution of the second water supply control is identical to a rotation-speed maintenance time in which the rotation speed of the drum 30 is maintained after completion of the second water supply control for convenience of description, it should be noted that the rotation-speed increasing time before execution of the second water supply control may be different from the rotation-speed maintenance time after completion of the second water supply control according to a structure or design of the washing and drying machine 1. Preferably, the rotation-speed increasing time period of the drum 30 before the second water supply control may be longer than the rotation-speed maintenance time period of the drum 30 after completion of the second water supply control.

As is apparent from the above description, the washing and drying machine and the method for controlling the same according to the embodiments can first increase a rotation speed of the drum when there occurs a water supply condition in which water must be supplied into the tub during execution of the drying process, and then supply water into the tub. Therefore, although water supplied into the tub is sprayed from the drum surface due to rotation of the drum, and flows into a space between the tub and the drum, the washing and drying machine according to the embodiments can minimize the amount of water supplied into the drum, such that the drying efficiency can be increased and the duration of the drying process can be reduced, resulting in prevention of unnecessary energy consumption.

## Claims

1. A washing and drying machine (1) comprising:
a tub (20);
a water supply unit (13, 14, 16) configured to supply water into the tub (20);
a drum (30) rotatably installed in the tub (20) to accommodate laundry;
a motor (7) configured to rotate the drum (30);
a drying unit (40, 44, 45) disposed over the tub (20), configured to heat air discharged from the tub (20) and circulate the heated air in such a manner that the laundry is dried; and
a controller (110) configured to control, during a drying process, the water supply unit and the motor (7) in a manner that water supply is performed after a rotation speed of the drum (30) has been increased to a predetermined speed, when a water supply condition occurs during execution of a drying process based on the drying unit (40, 44, 45),
wherein the drying unit further includes:
a heater (45) and blowing fan (44) configured to generate hot air for drying the laundry;
a drying duct (40) configured to direct the hot air into the drum (30);
a circulation passage configured to allow air discharged from the tub (20) to circulate in the drying duct (40);
a filter (60) installed at a suction inlet of the drying duct (40), configured to remove lint generated in the drying process; and
a temperature sensor (92) installed in the drying duct (40), configured to detect a temperature of the drying unit,
wherein the controller (110) is configured to control on/off operations of the heater (45) according to the temperature of the drying unit (40, 44, 45) during execution of the drying process, and
**characterized in that**
the controller (110) is further configured to determine the presence or absence of filter clogging using the number (N) of heater-off occurrence in which the heater-off time is equal to or longer than a predetermined time, and to detect occurrence of a water supply condition in response to determining the presence of filter clogging, to control the motor (7) such that the drum (30) rotates at the predetermined speed, and to control the water supply unit (13, 14, 16) such that water is supplied to the filter (60) in a manner that lint collected in the filter (60) is removed.

2. The washing and drying machine according to claim 1, wherein the controller (110) is configured to drive the motor (7) before execution of the water supply, so that the rotation speed of the drum (30) increases to the predetermined speed.

3. The washing and drying machine according to claim 1, wherein the controller (110) is configured to count time units during which the rotation speed of the drum (30) increases, and to control the water supply unit (13, 14, 16) to supply water into the tub (20) after a counted number of time units reaches a predetermined threshold number corresponding to the predetermined time period.

4. The washing and drying machine according to one of the preceding claims, wherein the controller (110) drives the motor (7) after completion of the water supply so that the rotation speed of the drum (30) returns to a speed of a drying process phase without water supply.

5. The washing and drying machine according to claim 4, wherein the controller (110) is configured to count further time units after completion of the water supply until the counted number of further time units reaches a predetermined threshold number corresponding to the predetermined time period for allowing the rotation speed of the drum (30) to return to the speed of the drying process phase without water supply.

6. A method for controlling a washing and drying machine (1) which includes a tub (20), a water supply unit (13, 14, 16) to supply water into the tub (20), a drum (30) rotatably installed in the tub (20) to accommodate laundry, a motor (7) to rotate the drum (30), a heater (45) to heat air discharged from the tub (20), a blowing fan (44) to supply heated air into the tub, a drying duct (40) to circulate the heated air, a filter (60) disposed in the drying duct (40), and a temperature sensor (92) to detect a temperature of the heated air in the drying duct (40), the method comprising:
determining whether a current process is a drying process;
determining (300, 400) whether a water supply condition occurs during execution of the drying process;
if the water supply condition occurs, increasing (302, 402) a rotation speed of the drum (30) by controlling the motor (7) until the rotation speed of the drum (30) reaches a predetermined speed, and supplying (306, 406) water into the tub (20) by controlling the water supply unit (13, 14, 16) thereafter,
**characterized by**
measuring a heater-off time;
determining whether the filter is clogged using the number (N) of heater-off occurrence in which the heater-off time is equal to or longer than a predetermined time;
operating the motor such that the rotation speed of the drum (30) reaches at the predetermined speed when it is determined that the filter is clogged, and
operating the water supply unit to supply water into the tub such that water is supplied to the filter (60) in a manner that lint collected in the filter (60) is removed.

7. The method according to claim 6, further comprising:
controlling (314, 414) the motor (7) after completion of the water supply so that the rotation speed of the drum (30) returns to a speed of a drying process phase without water supply.

8. The method according to claim 6 or 7, wherein the determining whether the water supply condition occurs includes:
determining whether the drying process starts; and
determining the presence or absence of filter clogging during execution of the drying process.

## Patentansprüche

1. Wasch- und Trockenmaschine (1), umfassend:
eine Wanne (20);
eine Wasserzufuhreinheit (13, 14, 16), die dazu ausgestaltet ist, der Wanne (20) Wasser zuzuführen; eine Trommel (30), die drehbar in der Wanne (20) installiert ist, um Wäsche aufzunehmen;
einen Motor (7), der zum Drehen der Trommel (30) ausgestaltet ist;
eine über der Wanne (20) angeordnete Trocknungseinheit (40, 44, 45), die dazu ausgestaltet ist, aus der Wanne (20) abgegebene Luft aufzuheizen und die aufgeheizte Luft auf eine Weise zu zirkulieren, dass die Wäsche getrocknet wird; und
eine Steuerung (110), die dazu ausgestaltet ist, während eines Trocknungsprozesses die Wasserzufuhreinheit und den Motor (7) auf eine Weise zu steuern, dass eine Wasserzufuhr ausgeführt wird, nachdem eine Drehgeschwindigkeit der Trommel (30) auf eine vorbestimmte Geschwindigkeit erhöht wurde, wenn ein Wasserzufuhrzustand während einer Ausführung eines Trocknungsprozesses basierend auf der Trocknungseinheit (40, 44, 45) eintritt,
wobei die Trocknungseinheit ferner Folgendes umfasst:
ein Heizelement (45) und ein Gebläse (44), die dazu ausgestaltet sind, Heißluft zum Trocknen der Wäsche zu erzeugen;
einen Trocknungskanal (40), der dazu ausgestaltet ist, die Heißluft in die Trommel (30) zu leiten; einen Zirkulationsabschnitt, der dazu ausgestaltet ist, aus der Wanne (20) abgegebener Luft zu erlauben, in dem Trocknungskanal (40) zu zirkulieren;
einen an einem Saugeinlass des Trocknungskanals (40) installierter Filter (60), der dazu ausgestaltet ist, bei dem Trocknungsprozess erzeugte Fussel zu entfernen; und
einen in dem Trocknungskanal (40) installierten Temperatursensor (92), der dazu ausgestaltet ist, eine Temperatur der Trocknungseinheit zu erkennen,
wobei die Steuerung (110) dazu ausgestaltet ist, Ein-/Aus-Vorgänge des Heizelementes (45) gemäß der Temperatur der Trocknungseinheit (40, 44, 45) während einer Ausführung des Trocknungsprozesses zu steuern, und
**dadurch gekennzeichnet, dass**
die Steuerung (110) ferner dazu ausgestaltet ist, das Vorhandensein oder Nichtvorhandensein von Filterverstopfungen unter Verwendung der Anzahl (N) von Heizelement-Aus-Ereignissen zu erkennen, in denen die Heizelement-Aus-Zeit gleich einer oder länger als eine vorbestimmte Zeit ist, und das Eintreten eines Wasserzufuhrzustandes als Reaktion auf ein Bestimmen des Vorhandenseins von Filterverstopfungen zu erkennen, den Motor (7) so zu steuern, dass die Trommel (30) sich mit der vorbestimmten Geschwindigkeit dreht und die Wasserzufuhreinheit (13, 14, 16) so zu steuern, dass dem Filter (60) auf eine Weise Wasser zugeführt wird, dass in dem Filter (60) angesammelte Fussel entfernt werden.

2. Wasch- und Trockenmaschine nach Anspruch 1, wobei die Steuerung (110) dazu ausgestaltet ist, den Motor (7) vor dem Ausführen der Wasserzufuhr anzutreiben, sodass sich die Drehgeschwindigkeit der Trommel (30) auf die vorbestimmte Geschwindigkeit erhöht.

3. Wasch- und Trockenmaschine nach Anspruch 1, wobei die Steuerung (110) dazu ausgestaltet ist, Zeiteinheiten zu zählen, während derer die Drehgeschwindigkeit der Trommel (30) sich erhöht, und die Wasserzufuhreinheit (13, 14, 16) zu steuern, um der Trommel (20) Wasser zuzuführen, nachdem eine gezählte Anzahl von Zeiteinheiten eines vorbestimmten Schwellenwertes, der dem vorbestimmten Zeitraum entspricht, erreicht.

4. Wasch- und Trockenmaschine nach einem der vorangehenden Ansprüche, wobei die Steuerung (110) den Motor (7) nach Abschluss der Wasserzufuhr antreibt, sodass die Drehgeschwindigkeit der Trommel (30) zu einer Geschwindigkeit einer Trocknungsprozessphase ohne Wasserzufuhr zurückkehrt.

5. Wasch- und Trockenmaschine nach Anspruch 4, wobei die Steuerung (110) dazu ausgestaltet ist, nach Abschluss der Wasserzufuhr weitere Zeiteinheiten zu zählen, bis die gezählte Anzahl weiterer Zeiteinheiten einen vorbestimmten Schwellenwert erreicht, der dem vorbestimmten Zeitraum entspricht, um zu erlauben, dass die Drehgeschwindigkeit der Trommel (30) zu der Geschwindigkeit der Trocknungsprozessphase ohne Wasserzufuhr zurückkehrt.

6. Verfahren zur Steuerung einer Wasch- und Trockenmaschine (1), die umfasst: eine Wanne (20), eine Wasserzufuhreinheit (13, 14, 16) zum Zuführen von Wasser in die Wanne (20), eine Trommel (30), die drehbar in der Wanne (20) installiert ist, um Wäsche aufzunehmen, einen Motor (7) zum Drehen der Trommel (30), ein Heizelement (45) zum Aufheizen von aus der Wanne (20) abgegebener Luft, ein Gebläse (44), um der Wanne aufgeheizte Luft zuzuführen, einen Trocknungskanal (40) zum Zirkulieren der aufgeheizten Luft, einen in dem Trocknungskanal (40) angeordneten Filter (60) und einen Temperatursensor (92) zum Erkennen einer Temperatur der aufgeheizten Luft in dem Trocknungskanal (40), wobei das Verfahren Folgendes umfasst:
Bestimmen, ob ein aktueller Prozess ein Trocknungsprozess ist;
Bestimmen (300, 400), ob ein Wasserzufuhrzustand während einer Ausführung des Trocknungsprozesses eintritt;
wenn der Wasserzufuhrzustand eintritt, Erhöhen (302, 402) einer Drehgeschwindigkeit der Trommel (30) durch Steuern des Motors (7), bis die Drehgeschwindigkeit der Trommel (30) eine vorbestimmte Geschwindigkeit erreicht, und Zuführen (306, 406) von Wasser in die Wanne (20) durch Steuern der Wasserzufuhreinheit (13, 14, 16) danach,
**gekennzeichnet durch**
Messen einer Heizelement-Aus-Zeit;
Bestimmen, ob der Filter verstopft ist, unter Verwendung der Anzahl (N) von Heizelement-Aus-Ereignissen, in denen die Heizelement-Aus-Zeit gleich der oder länger als eine vorbestimmte Zeit ist;
Betreiben des Motors derart, dass die Drehgeschwindigkeit der Trommel (30) die vorbestimmte Geschwindigkeit erreicht, wenn bestimmt wird, dass der Filter verstopft ist, und
Betreiben der Wasserzufuhreinheit, um der Wanne derart Wasser zuzuführen, dass Wasser dem Filter (60) auf eine Weise zugeführt wird, dass in dem Filter (60) gesammelte Fussel entfernt werden.

7. Verfahren nach Anspruch 6, ferner umfassend:
Steuern (314, 414) des Motors (7) nach Abschluss der Wasserzufuhr, sodass die Drehgeschwindigkeit der Trommel (30) zu einer Geschwindigkeit einer Trocknungsprozessphase ohne Wasserzufuhr zurückkehrt.

8. Verfahren nach Anspruch 6 oder 7, wobei das Bestimmen, ob der Wasserzufuhrzustand eintritt, Folgendes umfasst:
Bestimmen, ob der Trocknungsprozess beginnt; und
Bestimmen des Vorhandenseins oder Nichtvorhandenseins von Filterverstopfungen während der Ausführung des Trocknungsprozesses.

## Revendications

1. Machine à laver et sécher (1) comprenant :
une cuve (20) ;
une unité d'alimentation en eau (13, 14, 16) conçue pour alimenter en eau la cuve (20) ;
un tambour (30) installé de manière rotative dans la cuve (20) afin de recevoir du linge ;
un moteur (7) conçu pour faire tourner le tambour (30) ;
une unité de séchage (40, 44, 45) disposée au-dessus de la cuve (20), conçue pour chauffer de l'air déchargé à partir de la cuve (20) et mettre en circulation l'air chauffé de manière à ce que le linge soit séché ; et
un contrôleur (110) configuré pour contrôler, pendant un processus de séchage, l'unité d'alimentation en eau et le moteur (7) de manière à ce que l'alimentation en eau soit réalisée après qu'une vitesse de rotation du tambour (30) ait été augmentée à une vitesse prédéterminée, lorsqu'une condition d'alimentation en eau se produit pendant l'exécution d'un processus de séchage sur la base de l'unité de séchage (40, 44, 45),
l'unité de séchage incluant en outre :
un dispositif de chauffage (45) et un ventilateur (44) conçus pour générer de l'air chaud pour sécher le linge ;
un conduit de séchage (40) conçu pour diriger l'air chaud dans le tambour (30) ;
un passage de circulation conçu pour permettre à de l'air déchargé à partir de la cuve (20) de circuler dans le conduit de séchage (40) ;
un filtre (60) installé au niveau d'une entrée d'aspiration du conduit de séchage (40), conçu pour éliminer des peluches générées dans le processus de séchage ; et
un capteur de température (92) installé dans le conduit de séchage (40), conçu pour détecter une température de l'unité de séchage,
dans laquelle le contrôleur (110) est conçu pour contrôler des opérations de marche/arrêt du dispositif de chauffage (45) selon la température de l'unité de séchage (40, 44, 45) pendant l'exécution du processus de séchage, et
**caractérisée en ce que**
le contrôleur (110) est en outre conçu pour déterminer la présence ou l'absence d'un colmatage du filtre en utilisant le nombre (N) d'occurrences d'arrêt du dispositif de chauffage pour lesquelles le temps d'arrêt du dispositif de chauffage est supérieur ou égal à un temps prédéterminé, et pour détecter une occurrence d'une condition d'alimentation en eau en réponse à la détermination de la présence d'un colmatage du filtre, pour contrôler le moteur (7) de telle sorte que le tambour (30) tourne à la vitesse prédéterminée, et pour contrôler l'unité d'alimentation en eau (13, 14, 16) de telle sorte que le filtre (60) soit alimenté en eau de manière à ce que des peluches collectées dans le filtre (60) soient éliminées.

2. Machine à laver et sécher selon la revendication 1, dans laquelle le contrôleur (110) est conçu pour entraîner le moteur (7) avant l'exécution de l'alimentation en eau, de telle sorte que la vitesse de rotation du tambour (30) augmente jusqu'à la vitesse prédéterminée.

3. Machine à laver et sécher selon la revendication 1, dans laquelle le contrôleur (110) est conçu pour compter des unités de temps pendant lesquelles la vitesse de rotation du tambour (30) augmente, et pour contrôler l'unité d'alimentation en eau (13, 14, 16) afin d'alimenter en eau la cuve (20) après qu'un nombre compté d'unités de temps ait atteint un nombre seuil prédéterminé correspondant à la période de temps prédéterminée.

4. Machine à laver et sécher selon l'une quelconque des revendications précédentes, dans laquelle le contrôleur (110) entraîne le moteur (7) après l'achèvement de l'alimentation en eau de telle sorte que la vitesse de rotation du tambour (30) revienne à une vitesse d'une phase de processus de séchage sans alimentation en eau.

5. Machine à laver et sécher selon la revendication 4, dans laquelle le contrôleur (110) est conçu pour compter des unités de temps supplémentaires après l'achèvement de l'alimentation en eau jusqu'à ce que le nombre compté d'unités de temps supplémentaires atteigne un nombre seuil prédéterminé correspondant à la période de temps prédéterminée pour permettre à la vitesse de rotation du tambour (30) de revenir à la vitesse de la phase de processus de séchage sans alimentation en eau.

6. Procédé pour contrôler une machine à laver et sécher (1) qui inclut une cuve (20), une unité d'alimentation en eau (13, 14, 16) afin d'alimenter en eau la cuve (20), un tambour (30) installé de manière rotative dans la cuve (20) afin de recevoir du linge, un moteur (7) afin de faire tourner le tambour (30), un dispositif de chauffage (45) afin de chauffer de l'air déchargé à partir de la cuve (20), un ventilateur (44) afin d'alimenter en air chauffé la cuve, un conduit de séchage (40) afin de mettre en circulation l'air chauffé, un filtre (60) disposé dans le conduit de séchage (40), et un capteur de température (92) afin de détecter une température de l'air chauffé dans le conduit de séchage (40), le procédé comprenant les étapes consistant à :
déterminer si un processus actuel est un processus de séchage ;
déterminer (300, 400) si une condition d'alimentation en eau a lieu pendant l'exécution du processus de séchage ;
si la condition d'alimentation en eau a lieu, augmenter (302, 402) une vitesse de rotation du tambour (30) en contrôlant le moteur (7) jusqu'à ce que la vitesse de rotation du tambour (30) atteigne une vitesse prédéterminée, et alimenter (306, 406) en eau la cuve (20) en contrôlant l'unité d'alimentation en eau (13, 14, 16) ultérieurement,
**caractérisé par** les étapes consistant à :
mesurer un temps d'arrêt du dispositif de chauffage ;
déterminer si le filtre est colmaté en utilisant le nombre (N) d'occurrences d'arrêt du dispositif de chauffage pour lesquelles le temps d'arrêt du dispositif de chauffage est supérieur ou égal à un temps prédéterminé ;
opérer le moteur de telle sorte que la vitesse de rotation du tambour (30) atteigne la vitesse prédéterminée lorsqu'il est déterminé que le filtre est colmaté, et
opérer l'unité d'alimentation en eau pour alimenter en eau la cuve de telle sorte que le filtre (60) soit alimenté en eau de manière à ce que des peluches collectées dans le filtre (60) soient éliminées.

7. Procédé selon la revendication 6, comprenant en outre les étapes consistant à :
contrôler (314, 414) le moteur (7) après l'achèvement de l'alimentation en eau de telle sorte que la vitesse de rotation du tambour (30) revienne à une vitesse d'une phase de processus de séchage sans alimentation en eau.

8. Procédé selon la revendication 6 ou 7, dans lequel l'étape consistant à déterminer si la condition d'alimentation en eau a lieu inclut les étapes consistant à :
déterminer si le processus de séchage démarre ; et
déterminer la présence ou l'absence d'un colmatage du filtre pendant l'exécution du processus de séchage.
